# DEMANDE DE BREVET EUROPEEN

(11) **EP 0 936 112 A1**
(43) Date de publication de la demande: **18.08.1999**
(21) Numéro de dépôt: 99400275.6
(22) Date de dépôt: 05.02.1999
(51) Int. Cl.: B60T 7/10, B60T 13/74

(54) **Frein de stationnement électrique à tranfert d'énergie pour véhicule automobile**

(30) Priorité: 16.02.1998 FR 9801847
(71) Demandeur: Dura Automotive Systems France, 88360 Rupt sur Moselle (FR)
(72) Inventeur: Belmond, Jean-Marc, 74190 Passy (FR)
(74) Mandataire: Martin, Jean-Paul

(57) **Abrégé**

Frein électrique de stationnement de véhicule automobile, caractérisé en ce qu'il comprend: un moto-vérin (1) comportant un moteur électrique (2) ainsi qu'une vis de sortie (4) équipée d'un écrou (7) bloqué en rotation et mobile en translation lorsque la vis est entraînée en rotation par le moteur; un dispositif (6, 11, 14, 15, 16, 18, 19) de serrage/desserrage d'un câble (5) de frein, comportant une platine (6) solidaire d'une extrémité du câble et pouvant être entraînée en rotation par l'écrou ( 7 ) pour tendre ou détendre le câble, un dispositif de rattrapage de jeu ( 17, 21 ) pour stabiliser la longueur de câble dépassant de sa gaine, des moyens (8...) pour emmagasiner de l'énergie durant l'opération de desserrage et pour restituer cette énergie au câble (5) au cours de l'opération de serrage suivante afin d'accélérer la vitesse de déplacement de l'écrou. Le moyen de transfert d'énergie est avantageusement un ressort hélicoïdal (8) interposé entre l'écrou (7) et le réducteur (3) du moto-vérin (1), dont l'assistance à la manoeuvre de serrage réduit le temps nécessaire à celle-ci. L'invention permet également de diminuer l'encombrement général du frein.

## Description

La présente invention a pour objet un frein électrique de stationnement de véhicule automobile.

Le brevet FR-A-94 13 132 (2 726 525) décrit un frein électrique de stationnement de véhicule comprenant une roue dentée mécaniquement liée à des systèmes vis-écrou coaxiaux à la roue, qui s'étendent axialement de part et d'autre de la roue. Des câbles de frein sont reliés respectivement à un élément mobile en translation des systèmes vis-écrou, et un motoréducteur électrique assure l'entraînement de la roue en rotation.

Le fonctionnement de ce frein connu est relativement lent et fortement dépendant de la dérive se produisant au cours du temps sur la différence Longueur de câble - Longueur de gaine. De plus, sa structure comprend un nombre élevé de pièces, et est donc relativement complexe, onéreuse et encombrante.

L'invention a pour but de proposer un frein électrique dont le fonctionnement soit nettement plus rapide, plus stable et dont la structure est simplifiée et par conséquent d'un coût de revient réduit.

Conformément à l'invention, le frein électrique de stationnement visé par l'invention comprend :
a) un moto-vérin comportant un moteur électrique, un réducteur et une vis de sortie équipée d'un écrou bloqué en rotation et mobile en translation lorsque la vis est entraînée en rotation par le moteur ;
b) un dispositif de serrageldesserrage d'un câble (5) de frein, comportant une platine solidaire d'une extrémité du câble et pouvant être entraînée en rotation par l'écrou pour tendre ou détendre le câble.
c) un dispositif de rattrapage de jeu destiné à stabiliser la longueur de câble dépassant de sa gaine
d) des moyens pour emmagasiner de l'énergie durant l'opération de desserrage et pour restituer cette énergie au câble au cours de l'opération de serrage afin d'accélérer la vitesse de déplacement dudit écrou pendant ledit serrage.

Le fonctionnement de ce frein ne nécessite qu'un temps extrêmement réduit au serrage , grâce au transfert d'énergie entre le ressort et le câble pendant les phases de serrage et de desserrage du frein. En effet l'énergie accumulée dans le moyen considéré se libère lorsque l'ordre de serrage est donné et sollicite l'écrou dans le sens de son déplacement, ce qui soulage le moteur et lui permet ainsi de tourner plus vite . Le dispositif de rattrapage de jeu stabilise le comportement du câble en tant que réservoir d'énergie et contribue également directement à la réduction du temps de serrage par suppression de la course morte du câble.

Suivant un mode de réalisation préféré, ledit moyen de transfert d'énergie est un ressort hélicoïdal de traction-compression disposé coaxialement à la vis, entre un appui fixe contigu au moteur électrique et l'écrou.

Ce ressort présente dans cette configuration une loi course-effort proche de celle du câble. Le système vis-écrou est irréversible dans toutes les positions, y compris au repos, dés lors que la vis n'est pas entraînée en rotation par le moteur. De ce fait, lorsque le frein est en position desserrée, le système vis-écrou empêche de se détendre le ressort comprimé au maximum.

En position serrée du frein, le système vis-écrou empêche le sous-ensemble constitué par la platine rotative et le câble de revenir en position de repos.

D'autres particularités et avantages de l'invention apparaîtront au cours de la description qui va suivre, faite en référence aux dessins annexés qui en illustrent deux formes de réalisation à titre d'exemples non limitatifs.

La figure 1 est une vue en perspective, sensiblement à l'échelle, d'une première forme de réalisation du frein électrique de stationnement de véhicule conforme à l'invention.

La figure 2 est une vue de dessus du frein de la figure 1 dont la platine liée au câble est supposée dans un plan horizontal.

La figure 3 est une vue en élévation longitudinale du frein dans la direction de la flèche K de la figure 2.

La figure 4 est une vue en perspective du frein des figures 1 à 3 sans la platine rotative et le ressort de cliquet.

La figure 5 est un diagramme illustrant la variation des efforts du câble et du ressort de transfert d'énergie en fonction de la course de l'écrou lors d'une manoeuvre de serrage.

La figure 6 est un diagramme analogue à la figure 5 pour une manoeuvre de desserrage du frein.

La figure 7 est une vue en perspective, éclatée, sensiblement à l'échelle, d'une seconde forme de réalisation du frein électrique de stationnement de véhicule conforme à l'invention.

La figure 8 est une vue de dessus, avec arrachement partiel, du frein électrique de la figure 8 assemblé.

La première forme de réalisation du frein électrique de stationnement illustrée aux dessins 1 à 4 est destinée à équiper un véhicule automobile non représenté, dans lequel il est disposé, par exemple entre les deux sièges avant, en étant orienté dans les trois dimensions, comme indiqué par les axes X (direction longitudinale horizontale du véhicule), Y (direction transversale) et Z (direction verticale).

Ce frein comprend :
- un moto-vérin 1 comportant un moteur électrique 2 adapté aux tensions disponibles sur le véhicule , un réducteur interne 3 constitué par exemple d'une vis sans fin, d'une roue (non visibles aux dessins) et d'une vis 4 solidaire de la roue, de longueur adaptée à la course recherchée pour un câble 5 de frein ;
- un dispositif de serrage/desserrage du câble de frein 5, comportant une platine 6 solidaire d'une extrémité du câble 5 et pouvant être entraînée en rotation par un écrou 7 monté sur la vis 4 afin de tendre ou détendre le câble 5 ;
- un organe de transfert d'énergie à l'écrou 4, constitué dans l'exemple représenté par un ressort hélicoïdal 8 de traction-compression, disposé coaxialement à la vis 4, entre un appui fixe constitué par le boîtier 9 du réducteur 3, et l'écrou 7.

La platine 6 est montée rotative autour d'un axe 11 fixé à un support 12 lié au moteur 2, lequel est relié par une connexion électrique à un système de commande (non représenté) situé à portée du conducteur.

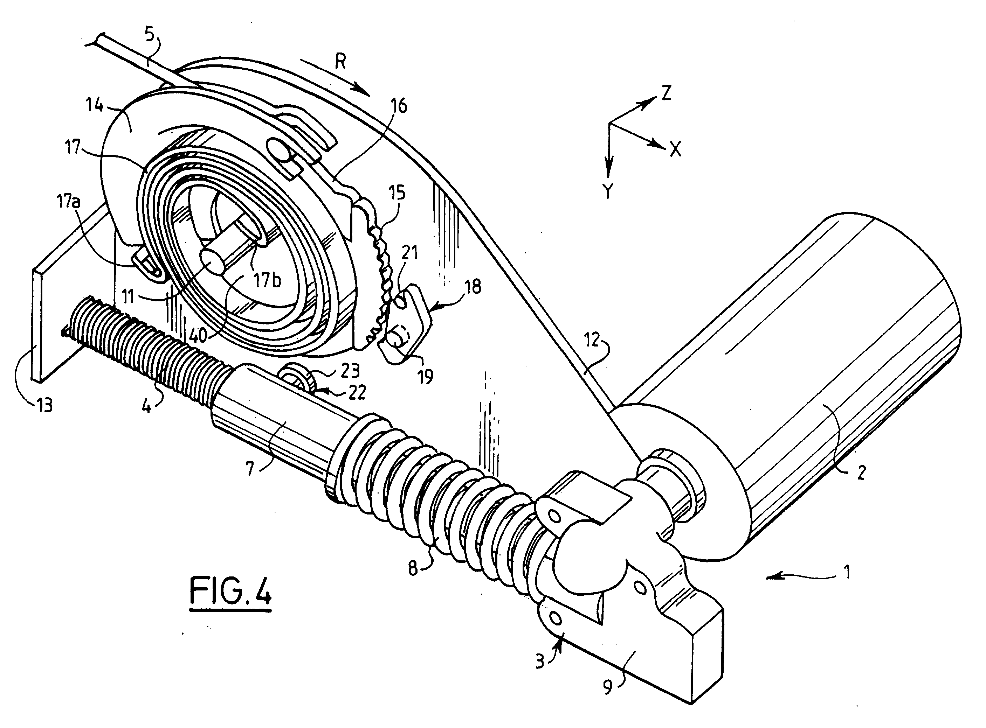

La périphérie d'un support secteur 16 est équipée d'un guide-câble 14 adapté pour accrocher, de manière connue en soi, l'extrémité du câble 5. Le support secteur 16 est également pourvu à sa périphérie d'un secteur denté 15 solidarisé par exemple par sertissage. Un ressort 17 est disposé entre la platine 6 et le support 12 avec l'une 17a de ses extrémités ancrée sur le guide-câble 14 et son extrémité opposée 17b ancrée sur une patte 10 de la platine 6, au voisinage de son axe de rotation 11 (figure 4). En regard du secteur denté 15 est disposé un cliquet 18 articulé sur la platine 6 autour d'un axe 19 pouvant s'engager dans la denture du support 15 ou s'en écarter.

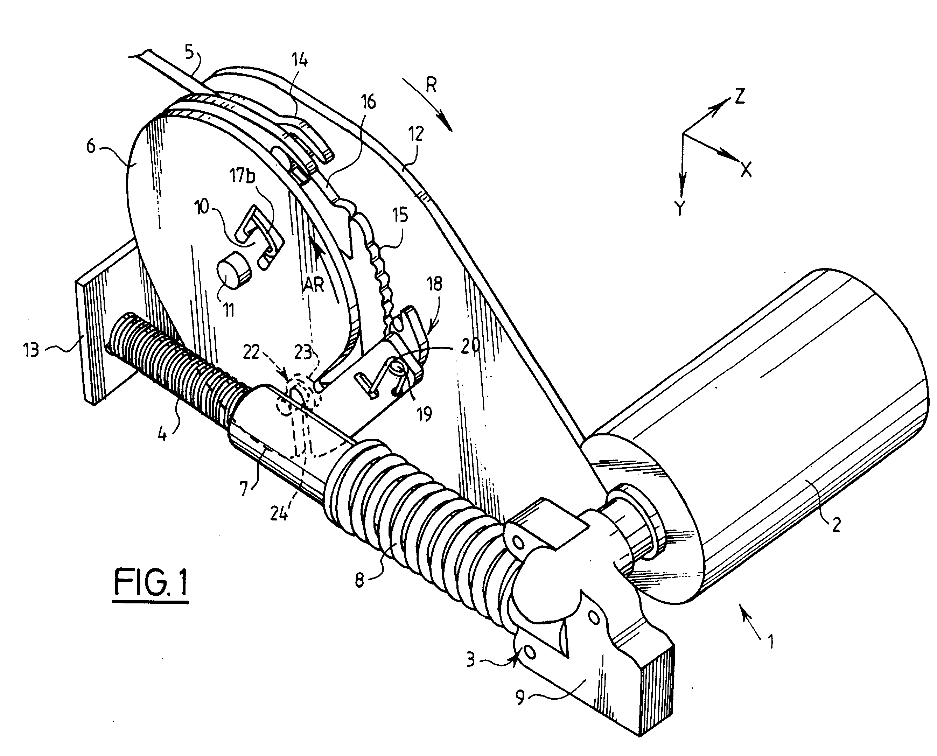

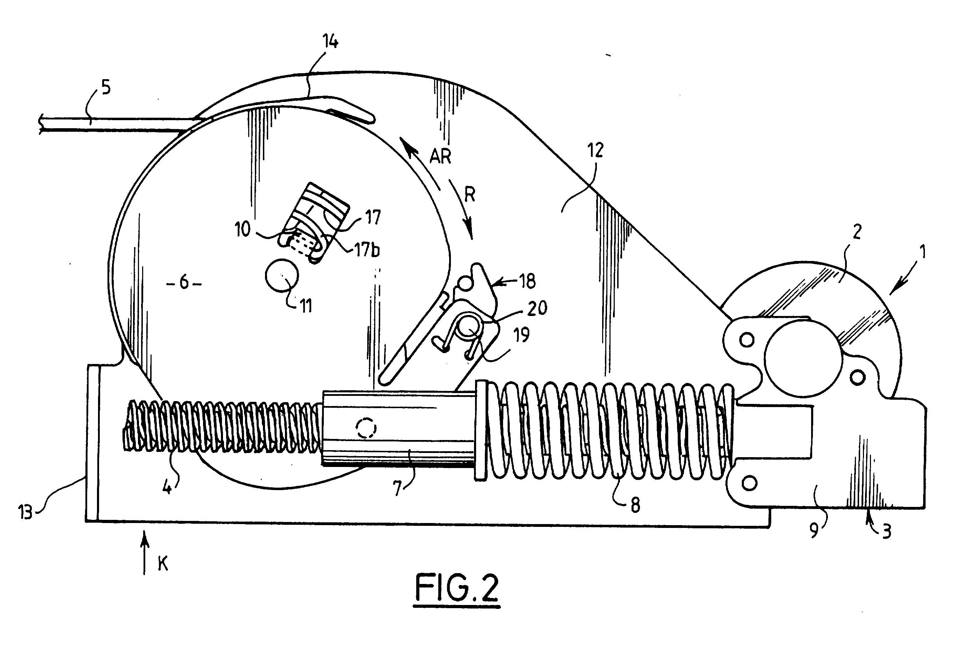

Le cliquet 18 est représenté en position « frein desserré », dans laquelle il n'est pas engagé dans la denture du secteur 15. Le cliquet est écarté de cette denture, grâce à une forme collaborant avec un pion 21 fixé au support 12 de manière connue en soi. Le cliquet 18 s'engage dans la denture du secteur 15 en s'écartant du pion 21 lorsque la platine 6 tourne lors du serrage, sous l'action d'un ressort 20 (Fig.1 et 2), connu en soi.

Le ressort 17 a une fonction de rappel de l'ensemble support secteur 16 - secteur 15 -guide-câble 14 dans le sens horaire de la flèche R (figures 1, 2 et 4), tendant à enrouler le câble 5 sous faible effort, entre la platine 6 et le support 12, le tout sans serrage dans les récepteurs de freinage. L'ensemble constitué par le ressort 17, le secteur 15, le support secteur 16, le cliquet 18, le pion 21 et le guide-câble 14 constitue un dispositif de rattrapage automatique de jeu du câble 5, connu en soi et qui ne nécessite pas de description plus détaillée.

L'écrou 7 est muni d'au moins un ergot 22 s'étendant radialement vers la platine 6 et terminé par une tête circulaire 23. Cet ergot radial 22 est engagé dans une encoche 24 (figure 1) formée sur la périphérie de la platine 6 et s'étendant dans une direction sensiblement radiale, de telle sorte que la tête 23 se trouve en appui sur la face intérieure de la platine 6, réalisant ainsi une liaison mécanique entre l'écrou 7 et la platine 6. Cette liaison bloque l'écrou 7 en rotation sur la vis 4, et permet d'entraîner la platine 6 en rotation sur un secteur circulaire déterminé, lorsque l'écrou 7 est entraîné en translation par une rotation de la vis 4 elle-même entraînée par la roue dentée du réducteur 3 lorsque le moteur électrique 2 est en marche.

Le frein électrique de stationnement qui vient d'être décrit fonctionne de la manière suivante.

Pour serrer le frein, on déclenche le moteur électrique 2 dans le sens qui fait tourner la platine 6 dans le sens horaire R, via la vis 4 qui tourne dans le sens approprié. De ce fait, l'écrou 7 bloqué en rotation est entraîné en translation par la rotation de la vis 4, et son ergot 22 fait tourner la platine 6, laquelle entraîne le guide-câble 14 qui tend le câble 5 lequel serre le frein par l'intermédiaire du cliquet 18 et du secteur 15. Au départ de cette manoeuvre, l'écrou 7 est en position rapprochée du réducteur 3 et comprime au maximum le ressort de rappel 8, lequel a ainsi emmagasiné une certaine quantité d'énergie. Le système vis 4-écrou 7 étant irréversible comme expliqué précédemment, empêche le ressort 8 comprimé au maximum de se détendre tant que le moteur électrique 2 n'est pas mis en marche.

Lorsque le moteur 2 est actionné dans le sens du serrage du câble 5, la vis 4 commence à tourner autour de son axe. L'énergie emmagasinée dans le ressort 8 est libérée, le ressort 8 se détend et exerce sur l'écrou 7 une poussée qui accélère le déplacement de celui-ci. Le déplacement de l'écrou 7 entraîne la rotation de la platine 6 par l'intermédiaire du doigt d'entraînement 22. Au tout début de la rotation de la platine 6, le cliquet 8 vient s'engager dans le secteur 15 grâce au pion 21 et sous l'effet du ressort de torsion 20. L'ensemble support-secteur 16 et guide-câble 14 est ainsi entraîné en rotation, lequel tend le câble 5. Ainsi, le ressort 8 fournit une partie de l'énergie nécessaire au serrage du frein.

En fin de serrage, le ressort 8 est détendu et l'énergie nécessaire à la fin de la course de l'écrou 7 et de la platine 6 est fournie en grande partie par le moteur 2.

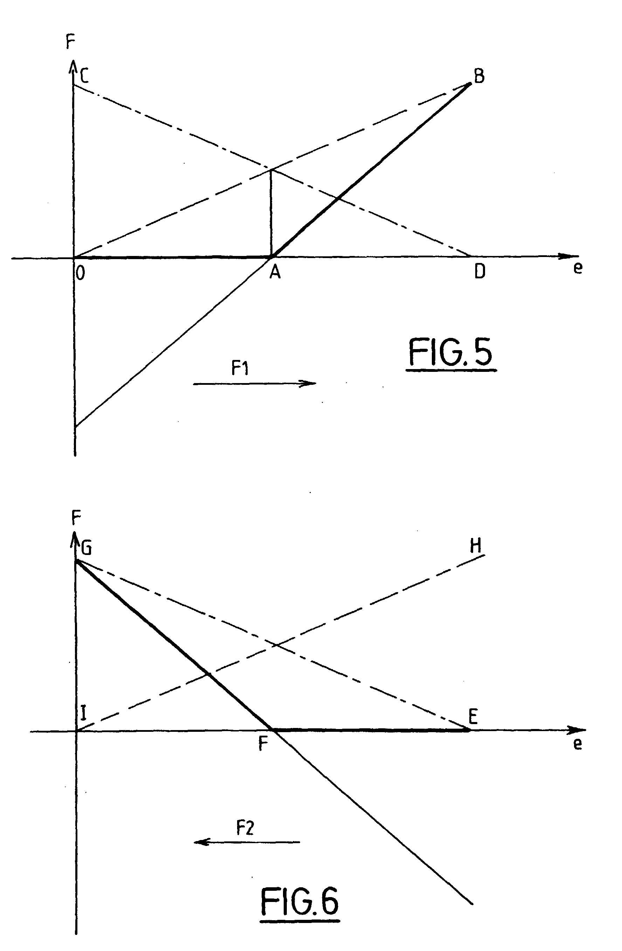

La manoeuvre de passage de la position desserrée à la position serrée du frein est illustrée par le diagramme de la figure 5, qui montre en ordonnées les efforts F et en abscisses la course e de l'écrou 7, lequel se déplace dans le sens de la flèche F1.

La section OA sur l'axe des abscisses représente la zone de déplacement rapide de l'écrou 7 sous charge négative ou nulle, et la section AB représente l'effort fourni par le moteur après atteinte du point d'équilibre entre l'effort résiduel de compression du ressort 8 et l'effort dans le câble 5 . La droite OB représente la montée en effort dans le câble 5 à partir de l'état desserré jusqu'à l'état serré, et la droite CD illustre l'effort exercé par le ressort 8 à partir de l'état desserré jusqu'à l'état serré du frein, cet effort décroissant régulièrement jusqu'à devenir nul au serrage maximum.

Le fait que lors du serrage, le ressort 8 fournisse une partie de l'énergie nécessaire, permet de diminuer le temps requis pour atteindre la position recherchée dans les cas d'utilisation les plus fréquents. De ce fait il est possible de réduire la taille du moteur électrique 2, et par conséquent l'encombrement du système complet par rapport aux freins électriques antérieurs, tels que le frein du brevet précité. En effet, le moteur 2 fonctionne dans un premier temps à vide, l'effort de poussée du ressort 8 allant dans le sens du déplacement, puis monte en charge sous un effort égal à la différence entre l'effort de tension dans le câble 5 et l'effort résiduel dans le ressort 8 au point de course considéré.

Pour passer de la position de serrage du frein à la position desserrée, on déclenche le moteur 2 dans le sens qui entraîne en rotation la vis 4 de telle sorte que l'écrou 7 soit entraîné en translation avec le réducteur 3, donc dans la direction qui comprime le ressort 8. L'ergot 22 entraîne alors en rotation la platine 6 dans le sens anti-horaire AR, ce qui détend le câble 5, lequel restitue par conséquent l'énergie emmagasinée lors du serrage. Ainsi est recomprimé progressivement le ressort 8, ce qui prépare l'assistance au serrage suivant.

De la même façon que durant la manoeuvre précédente, le moteur 2 fonctionne dans un premier temps à vide, la tension du câble 5 provoquant un effort de poussée de la platine 6 sur l'écrou 7, via l'ergot 22, allant dans le sens du déplacement voulu pour l'écrou 7, ce qui correspond à une première phase de transfert de l'énergie emmagasinée dans le câble 5. Puis, à partir du point d'équilibre des efforts dans le ressort et dans le câble, le moteur 2 monte en charge sous un effort égal à la différence entre l'effort de compression dans le ressort 8 et l'effort résiduel dans le câble 5.

Cette phase de desserrage est illustrée à la figure 6: l'écrou 7 se déplace dans le sens de la flèche F2, et le tronçon EF sur l'axe des abscisses correspond à la zone de déplacement rapide de l'écrou 7 sous charge négative ou nulle, la rapidité de ce déplacement étant obtenue par transfert d'énergie entre le câble 5 et le ressort 8 via l'écrou 7. La droite FG correspond à l'augmentation de l'effort F à fournir par le moteur 2 pendant la phase finale de compression du ressort 8 et de détente corrélative de l'effort du câble 5, lequel est représenté par la droite HI. Enfin la droite EG correspond à l'augmentation de l'effort de compression exercée sur le ressort 8 à partir de sa détente complète jusqu'à l'état desserré du frein. En position frein desserré, le cliquet 18 est désengagé de la denture du secteur 15 par l'intermédiaire du pion 21.

Il convient de noter que le gain de temps obtenu pour chaque manoeuvre de serrage se fait au détriment du temps de desserrage . En effet dans cette seconde phase l'effort de compression exercée sur le ressort 8 augmente légèrement le temps nécessaire à cette opération de desserrage.

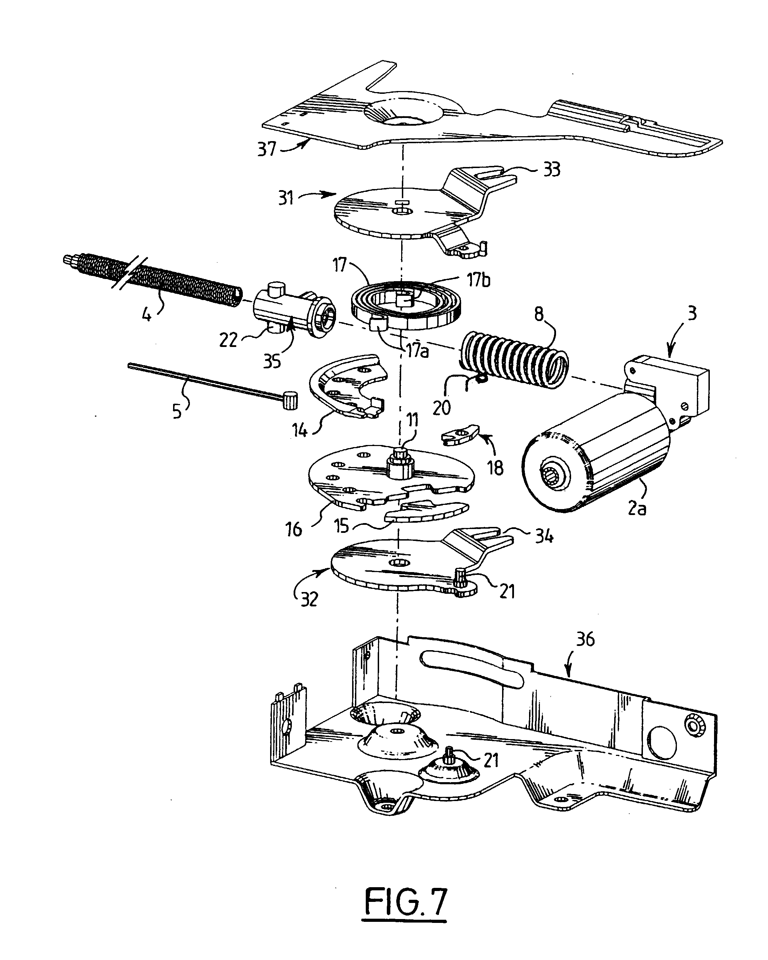

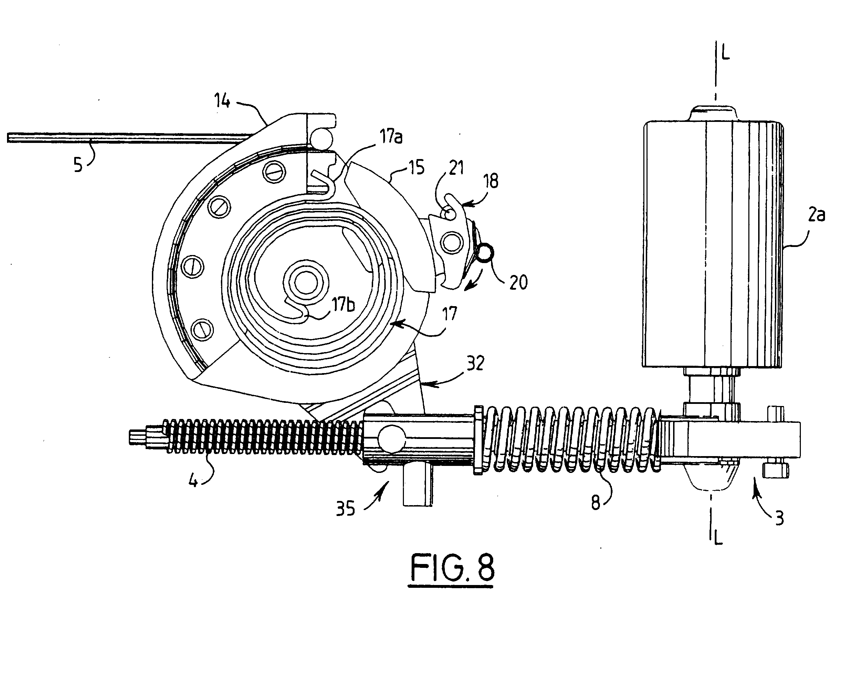

La seconde forme de réalisation du frein électrique illustrée aux figures 7 et 8, diffère de la précédente essentiellement par les points suivants :
- le moteur électrique 2a est disposé avec l'axe longitudinal L-L de son arbre parallèle au plan général de la platine (31, 32),
- la platine est constituée de deux pièces 31 et 32 dans chacune desquelles est formée une encoche 33, 34 de réception du doigt 22 de l'écrou 35, ces deux pièces étant positionnées de chaque côté du ressort spirale 17.
- Le support 12 est ici constitué par une pièce 36 formant boîtier, complétée au-dessus de la platine 31 par un couvercle 37.

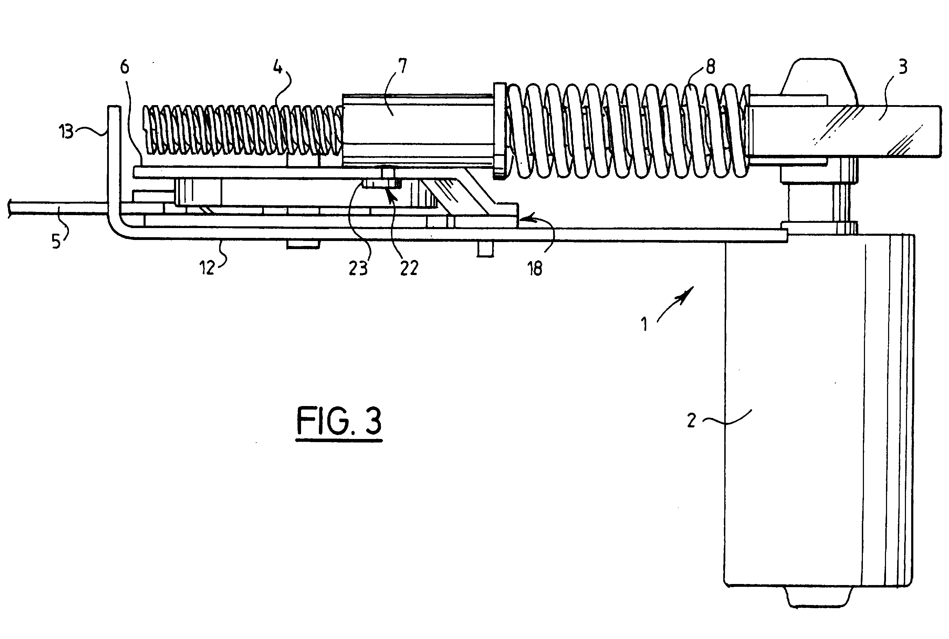

L'agencement du moteur 2a dans un plan horizontal après rotation de 90 degrés par rapport à sa position des figures 1 à 4, présente l'avantage de réduire encore l'encombrement global du frein et optimise la position relative des diverses pièces suivant les besoins d'intégration du frein dans le véhicule. Cette variante est bien sûr applicable à la réalisation des figures 1 à 4.

L'axe 11 de rotation de la platine (31 ; 32) est solidaire d'un support secteur 16 profilé pour être complété par le secteur denté 15 (Fig. 1 et 7).

Il est également possible de réaliser les moyens d'emmagasinage d'énergie sous la forme d'un ressort (non représenté) prenant appui, d'une part sur la patte 13 du support 12 (Fig.1), et d'autre part sur la platine (6 ; 31, 32) afin de solliciter en rotation celle-ci et non l'écrou 7. Dans une telle forme de réalisation il est bien entendu possible d'obtenir un couple d'assistance croissant sur la platine (6; 31, 32) en augmentant le bras de levier de l'effort délivré par les moyens d'emmagasinage d'énergie par rapport à l'axe de rotation 11 au cours de la manoeuvre de serrage. Ainsi, l'écrou 7 est entraîné en translation par la rotation de la platine (6, 31, 32) sous un effort non plus décroissant, mais croissant.

L'invention est susceptible de diverses variantes d'exécution. Ainsi deux ou plusieurs ergots d'entraînement et de blocage en rotation tels que l'ergot 22 et sa tête circulaire 23 pourraient être prévus, et ce ou ces ergots peuvent être remplacés par tout autre moyen d'entraînement approprié. De même le ressort hélicoïdal 8 peut être remplacé par tout moyen élastique remplissant la même fonction d'emmagasinage et de transfert d'énergie, constituant une assistance à l'opération de serrage du frein.

## Revendications

1. Frein électrique de stationnement de véhicule automobile, caractérisé en ce qu'il comprend :
a) un moto-vérin (1) comportant un moteur électrique (2) ainsi qu'une vis de sortie (4) équipée d'un écrou (7) bloqué en rotation et mobile en translation lorsque la vis est entraînée en rotation par le moteur;
b) un dispositif ( 6, 11, 14, 15, 16, 18, 19 ) de serrage/desserrage d'un câble (5) de frein, comportant une platine (6) solidaire d'une extrémité du câble et pouvant être entraînée en rotation par l'écrou ( 7 ) pour tendre ou détendre le câble.
c) un dispositif de rattrapage de jeu ( 17, 21 ) pour stabiliser la longueur de câble dépassant de sa gaine
d) des moyens (8...) pour emmagasiner de l'énergie durant l'opération de desserrage et pour restituer cette énergie au câble (5) au cours de l'opération de serrage suivante afin d'accélérer la vitesse de déplacement de l'écrou.

2. Frein électrique selon la revendication 1, caractérisé en ce que lesdits moyens de transfert d'énergie comprennent un ressort hélicoïdal (8) de traction-compression, disposé coaxialement à la vis (4), entre un appui fixe (3) et l'écrou (7).

3. Frein selon la revendication 1, caractérisé en ce que les moyens pour emmagasiner de l'énergie comportent un ressort dont une extrémité prend appui sur le support (12) et l'autre extrémité sollicite la platine en rotation, laquelle entraîne alors l'écrou (7).

4. Frein selon la revendication 2 ou 3, caractérisé en ce que l'écrou (7) est pourvu d'au moins un ergot radial (22) engagé dans une encoche (24) formée sur la périphérique de la platine (6) et susceptible d'entraîner celle-ci en rotation lorsque l'écrou se déplace en translation.

5. Frein selon l'une des revendications 1 à 3, caractérisé en ce qu'il est muni d'un système de rattrapage de jeu comprenant un ressort (17) et un pion (21) permettant un mouvement relatif de rotation d'un ensemble guide câble (14) - secteur (15) - support secteur (16) par rapport à la platine (6) en position desserrée, en ce que, en dehors de cette position, tout mouvement relatif de l'ensemble ( 14, 15, 16) par rapport à la platine (6) est interdit par l'intermédiaire de l'engagement du cliquet (18) dans le secteur (15), et en ce que à l'exception du pion (21) , tous les éléments sont montés rotatifs sur un support (12) lié au moteur électrique (2).

6. Frein électrique selon la revendication 5, caractérisé en ce que le système de rattrapage de jeu comprend un ressort (17) disposé entre la platine (6) et le support (12), et dont une extrémité (17b) prend appui sur la platine tandis que son extrémité opposée (17a) est fixée au guide-câble (14) et exerce sur celui-ci un effort de tension tendant à rattraper le jeu du câble (5) lorsque le cliquet (18) est écarté du secteur (15) par l'intermédiaire du pion (21).

7. Frein électrique selon la revendication 1, caractérisé en ce que le moteur électrique (2a) est disposé avec l'axe longitudinal (L-L) de son arbre parallèle au plan général de la platine rotative (31, 32), afin de réduire l'encombrement du frein.
